# EUROPÄISCHE PATENTSCHRIFT

(11) **EP 3 233 217 B1**
(45) Veröffentlichungstag und Bekanntmachung des Hinweises auf die Patenterteilung: **13.09.2023**
(21) Anmeldenummer: 15819811.9
(22) Anmeldetag: 17.12.2015
(51) Int. Cl.: A62C 35/68, A62C 37/44, F16K 37/00, A62C 37/50, F16K 1/20, F16K 27/02

(54) **FEUERLÖSCHANLAGENVENTILE UND FEUERLÖSCHANLAGEN MIT SELBIGEN**
FIRE EXTINGUISHING SYSTEM VALVE AND FIRE EXTINGUISHING SYSTEM HAVING SUCH A VALVE
VANNES D'INSTALLATIONS D'EXTINCTION D'INCENDIE ET INSTALLATIONS D'EXTINCTION D'INCENDIE ÉQUIPÉES DE CES VANNES

(30) Priorität: 19.12.2014 DE 102014226639
(43) Veröffentlichungstag der Anmeldung: 25.10.2017
(73) Patentinhaber: Minimax GmbH, 23843 Bad Oldesloe (DE)
(72) Erfinder: POHL, Matthias, 23843 Bad Oldesloe (DE)
(74) Vertreter: Eisenführ Speiser
(86) Internationale Anmeldenummer: PCT/EP2015/080328
(87) Internationale Veröffentlichungsnummer: WO 2016/097201

(56) Entgegenhaltungen:
- CN-U- 203 431 188
- DE-A1- 19 904 477
- DE-A1-102007 049 588
- JP-B2- 3 292 567
- US-A1- 2008 224 877
- US-A1- 2014 014 187

## Beschreibung

Die vorliegende Erfindung betrifft ein Feuerlöschanlagenventil mit einem Gehäuse, welches eine Fluideintrittskammer, eine Fluidaustrittskammer und einen zwischen einem Sperrzustand und einem Freigabezustand hin- und her bewegbaren Schließkörper aufweist, wobei die Fluideintrittskammer und die Fluidaustrittskammer im Sperrzustand voneinander getrennt sind und im Freigabezustand fluidleitend miteinander kommunizieren, wobei mindestens ein Drucksensor in das Gehäuse integriert ist.

Unter Feuerlöschanlagenventilen wird im Sinne der vorliegenden Erfindung die Gattung sowohl passiver als auch aktiver Alarmventile verstanden, die für den Einsatz in Feuerlöschanlagen, speziell Feuerlöschanlagen mit wasserbasierenden Löschmitteln (bspw. Wasser, Wasser mit Zusätzen) konzipiert sind. Prominenteste Vertreter dieser Ventiltypen sind Nass- und Trockenalarmventile, sowie Sprühwasserventile. Hierbei versteht man unter passiven Alarmventilen, dass bei Überschreiten vorgegebener Druckdifferenzen zwischen Eintritts- und Austrittsseite selbsttätig öffnen, von den Ventilen selbst ein Alarm ausgelöst wird in Reaktion auf das Erfassen dieses Öffnungszustandes, beispielsweise mittelbar mittels eines in einer externen Alarmleitung angeordneten Druckschalters, über den dann ein Alarmmittel wie etwa eine elektrisch betriebene Alarmhupe gesteuert wird, und/oder unmittelbar durch Steuerung des Löschmittelflusses zu einem fluidtechnisch mit dem Alarmventil verbundenen hydraulisch betriebenen Alarmmittel, wie etwa einer wassergetriebenen Alarmglocke. Teilweise werden auch anstelle von oder zusätzlich zu hydraulisch betriebenen Alarmglocken optische Anzeigen im Bereich der Alarmventile angeordnet, um bei einer Vielzahl parallel angeordneter Alarmventile besser unterscheiden zu können, welches der Alarmventile geöffnet wurde.

Unter aktiven Alarmventilen wird verstanden, dass die Ventile nach einem Eingang eines Feuersignals von externen Branderkennungsmitteln, oder als Funktion von externen Steuereingriffen, aktiv durch Öffnen des Ventils den Fluidstrom freigeben und ein Alarm ausgelöst wird wie bei den passiven Alarmventilen. Den vorgenannten Ventiltypen ist gemein, dass sie oft über lange Zeiträume in Feuerlöschanlagen installiert sind, ohne zum Einsatz kommen zu müssen, und es darauf ankommt, dass die Ventile im Ernstfall zuverlässig funktionieren. Somit ist eine regelmäßige Überprüfung der Funktionsfähigkeit der Ventile unerlässlich.

Im Stand der Technik ist es bekannt, im Bereich der Alarmventile externe Verrohrungen anzubringen und an diesen Verrohrungen Einrichtungen zur Druckmessung, z.B. Manometer und/oder Druckschalter. Hierüber kann beispielsweise der Druck in der Fluideintrittskammer erfasst werden. Auch ist bekannt, Einrichtungen anzubringen, mit deren ein Alarmventil auch ohne Vorliegen eines Feuers kurzzeitig zu öffnen, um regelmäßig überprüfen zu können, ob die Ventile in vorgegebener Art und Weise funktionieren.

Im Niederdruckbereich der klassischen Sprinkler- und Sprühwasserlöschanlagen bis etwa 25bar werden nach dem Stand der Technik externe Verrohrungen oft unter Verwendung von Gewindefittings hergestellt, teilweise auch auf der Baustelle. Der Aufwand zum Bereitstellen, Montieren, optisch ansprechenden Ausrichten sowie zum fluid- und druckdichten Verbinden der externen angeordneten Komponenten ist signifikant. Auch erfordern extern angeordnete Komponenten entsprechenden Platz im Aufstellungsraum. Und schließlich besteht bei extern angeordneten Verrohrungen die Gefahr, dass diese beim Transport zum Einbauort beschädigt wird, sofern diese bereits herstellerwerksseitig montiert werden.

Nach dem Stand der Technik muss bei Alarmventilen mit elektrisch betriebenen Alarmmitteln oder Anzeigen eine elektrische Verbindung hergestellt werden zwischen nahe dem Alarmventil angeordneten elektrischen Druckschaltern und einer üblicherweise entfernt angeordneten Brandmelder- oder Überwachungszentrale sowie wieder zurück von der Brandmelder- oder Überwachungszentrale zu dem nahe dem Alarmventil angeordneten elektrischen Alarmmittel oder zu der Anzeige. Solche elektrischen Verbindungen zwischen räumlich getrennt voneinander angeordneten Elementen können besonderen bei weiteren Entfernungen leicht unterbrochen werden und stellen daher in Feuerlöschanlagen ein Sicherheitsrisiko dar.

Die CN 203 431 188 U zeigt ein Feuerlöschanlagenventil mit einem Gehäuse, welches eine Fluideintrittskammer, eine Fluidaustrittskammer und einen zwischen einem Sperrzustand und einem Freigabezustand hin- und her bewegbaren Schließkörper aufweist, sowie mehrerer Drucksensoren zum Messen des Drucks in der Fluideintrittskammer und der Fluidaustrittskammer.

DE 199 04 477 A1 zeigt Einrichtung zur Überwachung und Alarmübertragung der Funktionstüchtigkeit von Feuerlöschanlagen oder dergleichen, insbesondere von Sprinkleranlagen oder Gaslöschanlagen.

JP 3 292 567 B2 zeigt ein Feuerlöschanlagenventil mit einem Gehäuse, welches eine Fluideintrittskammer, eine Fluidaustrittskammer und einen um das Drehlager schwenkbar gelagerten Schließkörper, welcher zwischen einem Freigabezustand und einem Sperrzustand, in welchem die Fluideintrittskammer und die Fluidaustrittskammer fluiddicht voneinander getrennt sind, hin- und herschwenkbar ist. In dem Gehäuse ist ein Alarmkanal ausgebildet, welcher im Sperrzustand fluiddicht von den Fluidkammern getrennt ist und im Freigabezustand mit den Fluidkammern kommuniziert. Außerhalb des Gehäuses ist ein Druckschalter vorgesehen.

Der Erfindung lag folglich die Aufgabe zugrunde, den apparativen und zeitlichen Aufwand bei der Herstellung/Montage der Alarmventile von Feuerlöschanlagen zu reduzieren, sowie insbesondere die Betriebssicherheit zu erhöhen.

Die Erfindung löst die ihr zugrunde liegende Aufgabe, durch ein Feuerlöschanlagenventil gemäß Anspruch 1.

Bei einem solchen erfindungsgemäßen Feuerlöschanlagenventil ist der Drucksensor in das Gehäuse integriert. Unter integriert wird im Sinne der Erfindung verstanden, dass der Drucksensor derart in dem Gehäuse des Ventils verbaut, mit anderen Worten montiert oder eingehaust, ist, dass keine Flansche, Rohrverbindungen und dergleichen als zusätzliche fluidführende Armaturen außen am Ventil oder gar separat zu dem Ventil vorgesehen werden müssen, um die erwähnte Druckmessung durchführen zu können.

Die Erfindung folgt hierbei dem zentralen Gedanken, dass durch Integration der Funktion des Drucksensors in das Ventilgehäuse die Anzahl der zu verbauenden Teile in der Feuerlöschanlage deutlich reduziert wird. Die Konfektionierung des Feuerlöschanlagenventils wird zudem vorzugweise bereits in der Herstellung, also vor dem Verbringen an den Einsatzort und dem eigentlichen Montieren vervollständigt, sodass auch der zeitliche Aufwand bereits bei der Inbetriebnahme der Feuerlöschanlage minimiert werden kann. Weiter vorzugsweise erlaubt die Verwendung des erfindungsgemäßen Alarmventils in einer der beschriebenen Ausführungsformen, auf elektrische Verbindungsleitungen zu verzichten: a) zwischen nahe dem Alarmventil angeordneten elektrisch betriebenen Alarmmitteln oder Anzeigen und einer entfernt angeordneten Brandmelder- oder Überwachungszentrale, und b) zwischen nahe dem Alarmventil angeordneten Drucksensoren und einer entfernt angeordneten Brandmelder- oder Überwachungszentrale.

Der integrierte Drucksensor ist vorzugsweise dazu eingerichtet, den in der Fluideintrittskammer herrschenden Druck zu erfassen. Es wird in einer Ausführungsform ein Drucksensor in Form eines Druckschalters bevorzugt, der gewissermaßen digital das Erreichen bzw. Über-/Unterschreiten eines Grenzwertes registriert. Mit der Auswahl eines Druckschalters oder eine definierten Einstellung des Druckschalters ist ein Druckgrenzwert vorgegeben. Der Druckschalter liefert als Druckdaten die Information, ob der Schaltdruck anliegt oder nicht (1/0). Besonders bevorzugt wird ein Druckmessaufnehmer, der den tatsächlich anliegenden Druck erfassen und mittels entsprechender Wandelmittel als diskreten Signalwert ausgeben kann. In bevorzugten Ausführungsformen kann der Drucksensor in allgemein bekannter Weise hierzu benötigte Wandler, Verstärker, Microcontroller und dergleichen aufweisen.

Weiter vorzugsweise ist der Drucksensor dazu eingerichtet, den in der Fluidaustrittskammer und/oder in der Fluideintrittskammer herrschenden Druck zu erfassen. Falls der Druck sowohl in der Fluideintrittskammer als auch in der Fluidaustrittskammer erfasst werden soll, wird bevorzugt, einen ersten Drucksensor und einen zweiten Drucksensor vorzusehen, welche beide in das Gehäuse integriert sind, und von denen jeweils ein Drucksensor in der Fluideintritts oder -Austrittskammer wirkend angeordnet wird.

Die Anordnung des Drucksensors beziehungsweise eines Messkopfes des Drucksensors kann hierbei wahlweise unmittelbar in der Fluideintrittskammer, der Fluideintrittskammer, oder in einem in das Ventil integrierten Alarmkanal erfolgen. Der Alarmkanal ist in der Sperrstellung des Schließkörpers fluiddicht von den Fluidkammern des Ventils getrennt. Es herrscht vorzugsweise Umgebungsdruck im Alarmkanal. Erst bei Bewegen des Schließkörpers von der Sperrstellung in die Freigabestellung kommuniziert der Alarmkanal mit den angrenzenden, nun ebenfalls verbundenen Fluidkammern.

In einer bevorzugten Ausführungsform der Erfindung, die zusätzlich einen separaten Aspekt der Erfindung darstellt, ist eine Anzeigeeinheit in das Gehäuse integriert. Die Anzeigeeinheit ist vorzugsweise dazu eingerichtet, Zahlenwerte und Textzeichen wiederzugeben, beispielsweise in Form eines LCD- oder LED-Displays. Alternativ oder zusätzlich kann die Anzeige aber beispielsweise in einer ökonomischen Bauform auch lediglich einzelne LEDs oder andere Leuchtmittel aufweisen, die dazu eingerichtet sind, durch Aufleuchten oder Nichtleuchten digital bestimmte Zustände wiedergeben. Solche Leuchtmittel werden insbesondere bevorzugt, wenn der Drucksensor als Druckschalter ausgebildet ist.

Vorzugsweise ist in einer weiteren bevorzugten Ausführungsform der Drucksensor mit einer Anzeigeeinheit, vorzugsweise mit der in das Gehäuse integrierten Anzeigeeinheit, zum Ausgeben der erfassten Druckdaten und/oder zum Ausgeben in Abhängigkeit von den erfassten Druckdaten ermittelter Informationen verbunden. Die Verwendung des erfindungsgemäßen Alarmventils in dieser Ausführungsform erlaubt es dem Anwender, nahe dem Alarmventil Anzeigen über bestimmte Betriebszustände zur Verfügung zu stellen, die über die reine Druckangabe hinaus gehen, z.B. Empfehlungen/Anweisungen als Klartext.

In einer weiteren bevorzugten Ausführungsform ist der Drucksensor mit einem Datenspeicher zum Hinterlegen der erfassten Druckdaten verbunden. Hierdurch wird es ermöglicht, nicht bloß den jeweils momentanen Druckwert zu erfassen, sondern eine Historie des Druckwertverlaufs zu erfassen und zur nachträglichen Auswertung bereitzustellen.

In einer besonders bevorzugten Ausgestaltung der Erfindung ist die Anzeigeeinheit mit dem Datenspeicher und/oder einem oder mehreren externen Drucksensoren verbunden und dazu eingerichtet, die dort hinterlegten bzw. von dort übermittelten Druckdaten auszugeben. Beispielsweise ist die Anzeigeneinheit dazu eingerichtet, die Werte der letzten Stunden, Tage, Wochen oder Monate auszugeben sowie ferner die erfassten Höchst- und Mindestwerte sowie gegebenenfalls Anstiegs- oder Sinkraten.

In einer weiteren bevorzugten Ausführungsform sind der integrierte Drucksensor und/oder der Datenspeicher und/oder ein oder mehrere externe Drucksensoren mit einer Datenschnittstelle zum Auslesen und Fernübertragen der erfassten Druckdaten verbunden. Die Datenschnittstelle umfasst vorzugsweise einen oder mehrere Anschlüsse zur Datenkommunikation.

Vorzugsweise ist die Datenschnittstelle zur Betriebsspannungsversorgung für die im Ventil integrierten Elemente eingerichtet. Unter einer Fernübertragung wird hierbei sowohl kabelgebundene als auch kabellose Datenübertragung verstanden. Mittels der Datenschnittstelle können die erfassten Druckdaten des Drucksensors und/oder Druckdaten aus dem Datenspeicher und/oder Druckdaten von extern angeordneten, mit der Datenschnittstelle kommunizierenden Drucksensoren an eine externe Datenverarbeitungseinheit, vorzugsweise einer Feuerlöschanlage übertragen werden, beispielsweise an eine Brandmelde- und/oder Löschsteuerzentrale. Hierdurch wird es ermöglicht, mittels signaltechnischer Verarbeitung und Bewertung der dort auflaufenden Druckdaten die Funktionsfähigkeit des Feuerlöschanlagenventils zu überprüfen, ohne eine Begehung vor Ort vornehmen zu müssen. Lediglich wenn durch bestimmte Druckdatenverläufe, beispielsweise plötzliche Druckabfälle, ein Indiz dafür vorliegt, dass die Funktion des Ventils eingeschränkt ist, kann situativ eine Begehung vorgenommen werden. Die Übertragung der Druckdaten mittels der Datenschnittstelle ermöglicht ferner eine mittels der Datenverarbeitungseinheit getriggerte Ansteuerung von zusätzlichen, externen Anzeigemitteln, vorzugsweise akustischen und/oder optischen Alarmmitteln und/oder weiteren (alphanumerischen) Displays.

Alternativ oder zusätzlich zu der externen Datenauswertung weist das Feuerlöschanlagenventil in einer bevorzugten Ausführungsform selbst eine elektronische Auswerteinheit auf, die zum Empfang von Daten und/oder zur Übermittlung von Zustandsinformationen des Ventils mit einem, mehreren oder sämtlichen nachfolgenden Elementen verbunden ist: Dem mindestens einen integrierten Drucksensor, der Anzeigeneinheit, der Datenschnittstelle, dem Datenspeicher, einem oder mehreren externen Drucksensoren.

Ein Empfang von Daten kommt insbesondere in Betracht vom Drucksensor und dem Datenspeicher. Ein Übermitteln von Daten wird insbesondere vorgenommen in Richtung der Anzeigeeinheit und/oder der Datenschnittstelle. Unter Zustandsinformation werden erfindungsgemäß insbesondere der Sperr- und Freigabezustand des Schließkörpers sowie weiter vorzugsweise der Standort des Ventils, der Ventiltyp sowie die vom Drucksensor und/oder dem Datenspeicher empfangenen Druckdaten sowie gegebenenfalls Datenverarbeitungsergebnisse, die die elektronische Auswerteinheit auf Basis der empfangenen Daten vorgenommen hat. Zur Vernetzung des Ventils mittels der Datenschnittstelle allgemein und zur Standortübermittlung insbesondere wird vorzugsweise ein sogenanntes Adressierungsmodul in der elektronischen Auswerteinheit vorgesehen. Wenn die Datenschnittstelle beispielsweise als Ringbus ausgebildet ist, kann die Auswerteinheit mittels des Adressierungsmoduls zusätzlich zu bzw. gemeinsam mit den Informationen bezüglich der Druckdaten den Standort ausgeben.

Das Adressierungsmodul, vorzugsweise steckbar und/oder austauschbar ausgeführt, ist über eine Signalleitung mit einem Ringbusteilnehmermodul einer zentralen Steuereinheit, beispielsweise einer Brandmelder- und/oder Löschsteuerzentrale verbunden. Damit ist das Adressierungsmodul ein adressierbarer Teilnehmer auf der Signalleitung, die vorzugsweise als Ringbusleitung ausgebildet ist. Vorzugsweise ist die Adresse des Adressierungsmoduls einstellbar. Das Adressierungsmodul sendet Daten über den Ringbus. In einer bevorzugten Ausführung werden die erfassten Druckwerte oder erfasste Änderungen des Drucks, oder das Auftreten einer Druckänderung oder Störungen mit Hilfe eines Datenübertragungsprotokolls an das Ringbusteilnehmermodul übertragen.

Die Signalleitung ist in einer vorteilhaften Ausführung als geschlossene Ringbusleitung ausgeführt. Diese hat den Vorteil, dass bei Unterbrechung dieser Signalleitung, z.B. bei Drahtbruch, die Energieversorgung und die Kommunikation mit den adressierbaren Teilnehmern von beiden Seiten des ehemaligen Ringes über das Ringbusteilnehmermodul sichergestellt werden. In einer weiteren vorteilhaften Ausführung ist diese Signalleitung als eine Stichleitung für adressierbare Teilnehmer ausgelegt.

Die elektronische Auswerteinheit ist vorzugsweise dazu eingerichtet, von dem Drucksensor und/oder dem Datenspeicher und/oder einem oder mehreren externen Drucksensoren erhaltenen Druckdaten mit vordefinierten Grenzwerten abzugleichen und bei Erreichen bzw. bei Überschreiten oder Unterschreiten dieser Grenzwerte ein repräsentatives Signal als Zustandsdefinition zu übermitteln.

In einer weiteren bevorzugten Ausführungsform des Feuerlöschanlagenventils weist der Schließkörper einen Steuerantrieb auf, und die elektronische Auswerteinheit ist dazu eingerichtet, den Schließkörper mittels des Steuerantriebs in die Freigabe- oder Sperrstellung zu bringen. Der Steuerantrieb kann hierbei ein prinzipiell bekannter elektrischer beziehungsweise elektromagnetischer, hydraulischer oder pneumatischer Steuerantrieb sein, jeweils mit entsprechender Ansteuerung.

Besonders bevorzugt sind zusätzlich zum Drucksensor eines, mehrere oder sämtliche der folgenden Elemente in das Gehäuse integriert: die Anzeigeneinheit, die Datenschnittstelle, die Datenspeicher, die elektronische Auswerteinheit.

In einer weiteren bevorzugten Weiterbildung der Erfindung weist das Gehäuse einen Gehäusedeckel, vorzugsweise einen Handlochdeckel auf, wobei insbesondere eines, mehrere oder sämtliche der folgenden Elemente in den Gehäusedeckel integriert sind: der Drucksensor, die Anzeigeneinheit, die Datenschnittstelle, der Datenspeicher, die elektronische Auswerteinheit. Hierdurch wird es ermöglicht, die Bauteilvielfalt einer Serie von Feuerlöschanlagenventilen zu reduzieren, ohne die Funktionsvielfalt kompromittieren zu müssen. Es können ein universeller Gehäusekörper, der für alle gebotenen Funktionalitäten entsprechende Ausnehmungen aufweist, und verschiedentlich konfektionierte Gehäusedeckel hergestellt werden. Durch Zuweisung des jeweiligen Gehäusedeckels mit seinen dort integrierten Funktionalitäten zu dem universellen Gehäusekörper werden dann die jeweils unterschiedlichen Funktionen des Feuerlöschanlagenventils zusammengestellt. Durch dieses erfindungsgemäße Baukastensystem wird es ferner auch ermöglicht, nachträglich bei bestehenden Feuerlöschanlagen durch Tausch des Gehäusedeckels zusätzliche Funktionen hinzuzufügen, oder in der Praxis nicht benötigte Funktionen abzurüsten. All dies gelingt, ohne an der bestehenden Feuerlöschanlage Armaturen zu entfernen oder nachträglich installieren zu müssen, was jeweils mit hohem Aufwand und möglichen Undichtigkeiten einherginge. Der Gehäusedeckel, beispielsweise in der Ausführungsform als Handlochdeckel, weist vorzugsweise bekannte und bewährte Dichtungsmechanismen auf, die einen zuverlässigen Einsatz erlauben.

Der Gehäusedeckel, insbesondere in der Ausführungsform als Handlochdeckel, ermöglicht bei temporärer Entfernung vorzugsweise den Zugriff auf die Fluideintrittskammer und/oder Fluidaustrittskammer sowie besonders bevorzugt auf den Schließkörper. Bei Integration des Drucksensors in den Gehäusedeckel sind vorzugsweise für den Drucksensor, oder bei mehreren Drucksensoren für jeden Drucksensor, entsprechende Fluidleitungskanäle in Form von Ausnehmungen vorgesehen, in die der Drucksensor jeweils hinein verlegt werden kann. Es können beispielsweise Sensoren mit integriertem A/D-Wandler, sowie optional Verstärker, Microcontroller und dergleichen eingesetzt werden, oder Sensoren, die an einen ebenfalls im Gehäusedeckel integrierten A/D-Wandler angeschlossen werden. Einfachere Sensortypen, wie beispielsweise Druckschalter, lassen sich in analoger Weise im Gehäusedeckel unterbringen. Dasselbe gilt auch für die übrigen vorgenannten Integrationselemente.

Das erfindungsgemäße Feuerlöschanlagenventil ist, wie eingangs erwähnt, besonders bevorzugt ein Nassalarmventil, oder ein Trockenalarmventil, oder ein Sprühwasserventil. Dies umfasst auch "Sonderbauformen" dieser Alarmventiltypen bzw Kombinationen davon, wie sie als vorgesteuerte Trockenanlagen bekannt sind. Das jeweils dergestalt ausgebildete Ventil weist die weiteren fachüblichen technischen Mittel auf, auf die zugunsten einer prägnanten Darstellung hier verzichtet wird. Im Betrieb unterscheiden sich die vorgenannten Ventiltypen in erster Linie in der Art, wie sich die Druckniveaus in den unterschiedlichen Ventilkammern ändern. Im Betrieb eines Nassalarmventils beispielsweise steht in der mit Löschfluid gefüllten Fluidaustrittskammer bei geschlossenen Sprinklerdüsen ein bestimmter Fluiddruck p2 an, während in der Fluideintrittskammer ein Druck p1 herrscht. Die Drücke p1 und p2 können annähernd gleich oder gleich sein und vorzugsweise im Bereich von 1 bis 25 bar liegen. Der Druck in der Fluidaustrittskammer (p2) fällt, sobald die Sprinklerdüsen öffnen. Mit zeitlicher Verzögerung öffnet, sobald ein bestimmtes Druckgefälle zwischen p2 und dem Druck p1 in der Fluideintrittskammer erreicht oder überschritten wird, der Schließkörper des Ventils, wodurch sich auch der Druck p1 in der Fluideintrittskammer ändert. Der zuvor statische Druck sinkt zunächst unmittelbar nach Öffnen des Ventils, und es stellt sich allmählich ein neuer Druck p3, definiert als Fließdruck, ein. Falls das Ventil einen Alarmkanal aufweist, in dem in Sperrstellung des Schließkörpers Umgebungsdruck herrscht, wird in diesem Alarmkanal mit Öffnen des Ventils in die Freigabestellung ein Druckanstieg zu verzeichnen sein.

Bei Trockenalarmventilen ist die Fluidaustrittskammer (stromabwärts des Schließkörpers) mit einem unter Überdruck stehenden Gas gefüllt, vorzugsweise bei p2 von 0,8 bis 4 bar. Die Fluideintrittskammer ist vorzugsweise wassergefüllt mit p1 in einem Bereich von 1 bis ca. 25 bar, Druckangaben jeweils relativ zum Umgebungsdruck. Falls das Ventil einen Alarmkanal aufweist, in dem in Sperrstellung des Schließkörpers Umgebungsdruck herrscht, wird in diesem Alarmkanal mit Öffnen des Ventils in die Freigabestellung ein Druckanstieg zu verzeichnen sein

Vorzugsweise weist das Feuerlöschanlagenventil bis zu drei in das Ventil integrierte Drucksensoren auf, die jeweils den Druck in der Fluideintrittskammer, der Fluidaustrittskammer und/oder dem Alarmkanal überwachen.

Naßalarmventile sind beispielsweise in EN 12259-2 beschrieben, Trockenalarmventile in EN12259-3 und Sprühwasserventile in prEN 12259-9. Darüber hinaus sind diese Ventiltypen in den Prüf- und Zulassungsspezifikationen privater Institutionen wie VdS Schadenverhütung, Köln, FM Global, West Glocester oder UL, Northbrook beschrieben.

In einem zweiten Aspekt betrifft die Erfindung eine Feuerlöschanlage, insbesondere eine Sprinkleranlage, mit einer oder mehreren Fluidleitungen, in denen ein Feuerlöschanlagenventil zum Sperren und Freigeben der Fluidleitungen angeordnet ist.

Die Erfindung löst bei einer solchen Feuerlöschanlage die eingangs bezeichnete Aufgabe, in dem das Feuerlöschanlagenventil nach einer der hierin beschriebenen vorstehenden bevorzugten Ausführungsformen ausgebildet ist.

Somit greift die Feuerlöschanlage, die dergestalt ausgebildet ist, auf die gleichen Vorteile und bevorzugten Ausführungsformen zu, die vorstehend auch unter Bezugnahme auf das Feuerlöschanlagenventil beschrieben wurden. Es wird an dieser Stelle auf die obigen Ausführungen verwiesen. In einer bevorzugten Weiterbildung der Feuerlöschanlage kommt ein Feuerlöschventil zum Einsatz, welches eine Datenschnittstelle aufweist, wobei die Feuerlöschanlage eine Datenverarbeitungseinheit aufweist, welche zum Auslesen der Datenschnittstelle mit dem Feuerlöschventil verbunden ist.

Vorzugsweise ist die Datenverarbeitungseinheit dazu eingerichtet, die von der Datenschnittstelle ausgelesene Information zu analysieren, und in Abhängigkeit von dieser Analyse eines, mehrere oder sämtliche der folgenden Ereignisse auszulösen:
- Ausgeben einer Nachricht darüber, ob das Feuerlöschventil ordnungsgemäß arbeitet,
- Ausgeben einer Nachricht darüber, ob in der Fluidleitung ein ausreichend hoher Fluiddruck herrscht, und/oder
- Ausgeben einer Nachricht darüber, dass das Feuerlöschventil geöffnet worden ist.

Unter einer Nachricht wird diesbezüglich gemäß der folgenden, nicht abschließenden Aufzählung ein optisches und/oder akustisches Signal, vorzugsweise mit einer vordefinierten Signalfolge, verstanden, sowie weiter vorzugsweise zur Fernübertragung eine SMS, Telefon- oder VOIP- Sprachnachricht, Fax-Nachricht, E-Mail, IRC-Nachricht, Nachricht in Form einer elektronischen Push- und Pull-Benachrichtigung, Internetprotokoll-basierte Nachricht, Ethernetprotokoll-basierte Nachricht, und dergleichen. Der Inhalt dieser Nachrichten ist vorzugsweise in Nachrichtendateien gespeichert. In einer weiteren Ausgestaltung der Erfindung, werden die oben genannten Nachrichten oder Nachrichtendateien und/oder Zustandsinformationen vom Feuerlöschanlagenventil selbst versendet. Zustandsinformationen sind vorzugsweise Informationen/Signale über die Änderung des Sperr- oder Freigabezustandes des Schließkörpers (4) des Feuerlöschanlagenventils, Druckwerte oder Meldungen über Druckgrenzwertüber- oder Unterschreitung. Hierzu weist der Datenspeicher vorgegebene Nachrichtendateien und/oder mindestens einen vordefinierten Druckgrenzwert auf. In Abhängigkeit von den erfassten Druckwerten des Drucksensors und dem Vergleich mit dem mindestens einen vordefinierten Druckgrenzwert, vorzugsweise durch die elektronische Auswerteinheit, wird bei Überschreiten oder Unterschreiten des mindestens einen vordefinierten Grenzwertes von der elektronischen Auswerteeinheit eine mit diesem mindestens einen vordefinierten Grenzwerte assoziierte Nachrichtendatei versendet, vorzugsweise über die Datenschnittstelle. Mit Hilfe eines Konfigurationsmittels wird ein Auslesen des Datenspeichers und/oder ein Update einer eingebetteten Software der elektronischen Auswerteinheit und/oder Ändern oder Eingeben des mindestens einen Druckgrenzwertes und/oder einer oder mehrerer Nachrichtendateien eine Konfigurationsschnittstelle realisiert, welche das Feuerlöschanlagenventil oder dessen Gehäuse aufweist, In einer besonders bevorzugten Ausführung ist diese Konfigurationsschnittstelle im Gehäusedeckel integriert.

Das Konfigurationsmittel wird vorzugsweise aus der nicht abschließenden Liste der folgenden Geräte ausgewählt, Notebook, iPad, Smartphone, Programmiergerät, Servicegerät.

Das Auslesen des Datenspeichers und/oder ein Update einer eingebetteten Software der elektronischen Auswerteinheit und/oder Ändern oder Eingeben des mindestens einen Druckgrenzwertes und/oder einer oder mehrerer Nachrichtendateien erfolgt in einer alternativen Ausführung über die Datenschnittstelle, vorzugsweise mit Hilfe der Brandmelder- und Löschsteuerzentrale.

Die Erfindung betrifft ein einem weiteren Schritt ein Verfahren zur Zustandsüberwachung eines Feuerlöschanlagenventils.

Die Erfindung löst die zugrunde Aufgabe, insbesondere bei Verwendung des erfindungsgemäßen Feuerlöschanlagenventils, mit den folgenden Schritten: Erfassung eines Druckwertes in der Fluideintrittskammer und/oder der Fluidaustrittskammer; Vorgabe eines Druckgrenzwertes; Übermittlung von Zustandsinformationen und/oder einer Nachricht, insbesondere in Form einer Nachrichtendatei, an einen oder mehrere vordefinierte Empfänger, insbesondere wenn der erfasste Druckwert den vorgegebenen Druckgrenzwert überschreitet oder unterschreitet, und/oder Änderung des Sperr- oder Freigabezustandes des Feuerlöschanlagenventils, insbesondere wenn der erfasste Druckwert den vorgegebenen Druckgrenzwert überschreitet oder unterschreitet.

Das erfindungsgemäße Verfahren macht sich hierbei die gleichen Erkenntnisse und Vorteile zunutze wie das erfindungsgemäße Feuerlöschanlagenventil, weswegen diesbezüglich auf die obigen Ausführungen verwiesen wird. Ferner verfügt das Verfahren über die gleichen vorteilhaften Weiterbildungen. Die oben beschrieben Eignungen und Funktionen des Feuerlöschanlagenventils werden vorzugsweise als Verfahrensschritte von dem Verfahren verwirklicht.

In einer bevorzugten Weiterbildung erfolgt die Vorgabe durch Auswahl oder Einstellung eines Druckschalters.

Vor dem Verfahrensschritt des Übermittelns von Zustandsinformationen erfolgt vorzugsweise ein Vergleich des erfassten Druckwertes mit mindestens einem, etwa in einem Datenspeicher vorhandenen, vordefinierten Druckgrenzwert.

Als vordefinierter Empfänger wird vorzugsweise eine Anzeigeeinheit verwendet, welche am oder im Gehäuse oder dem Gehäusedeckel des Feuerlöschanlagenventils angeordnet ist.

Der vordefinierte Empfänger stellt alternativ oder zusätzlich vorzugsweise eine Brandmelder- und/oder Löschsteuerzentrale dar.

Der mindestens eine vordefinierte Druckgrenzwert und/oder die Nachricht werden vorzugsweise über die Datenschnittstelle oder eine dedizierte Konfigurationsschnittstelle übertragen, welche das Feuerlöschanlagenventil oder dessen Gehäuse aufweist, und die insbesondere im Gehäusedeckel integriert ist. Die Vorgabe und/oder Änderung des Druckgrenzwerts werden vorzugsweise mittels eines Konfigurationsmittels eingeben wird und in einem vorgesehenen Datenspeicher hinterlegt. Als Konfigurationsmittel kommt vorzugsweise ein mit der Datenschnittstelle oder Konfigurationsschnittstelle kommunizierendes Bedienfeld, bspw. Tastenfeld, insbesondere eines verbundenen stationären oder tragbaren Personal Computer, Handheld, Smartphone oder dergleichen in Betracht.

Sofern weiter oben die Formulierung "und/oder" verwendet wurde, so wird hierin verstanden, dass eines, mehrere oder sämtliche der in der Aufzählung genannten Elemente gemeint sein können.

Die Formulierung "aufweisend" ist als nicht abschließende Aufzählung zu verstehen.

Die Erfindung wird im Folgenden unter Bezugnahme auf die beigefügten Figuren anhand eines bevorzugten Ausführungsbeispiels näher beschrieben. Hierbei zeigen:
- Fig. 1: eine schematische Querschnittansicht eines Feuerlöschanlagenventils gemäß dem bevorzugten Ausführungsbeispiel,
- Fig. 2 a, b: bieten schematische Ansichten eines Gehäusedeckels für das Feuerlöschanlagenventil aus Fig. 1, und
- Fig. 3: eine schematische Darstellung einer Feuerlöschanlage gemäß einem bevorzugten Ausführungsbeispiel.

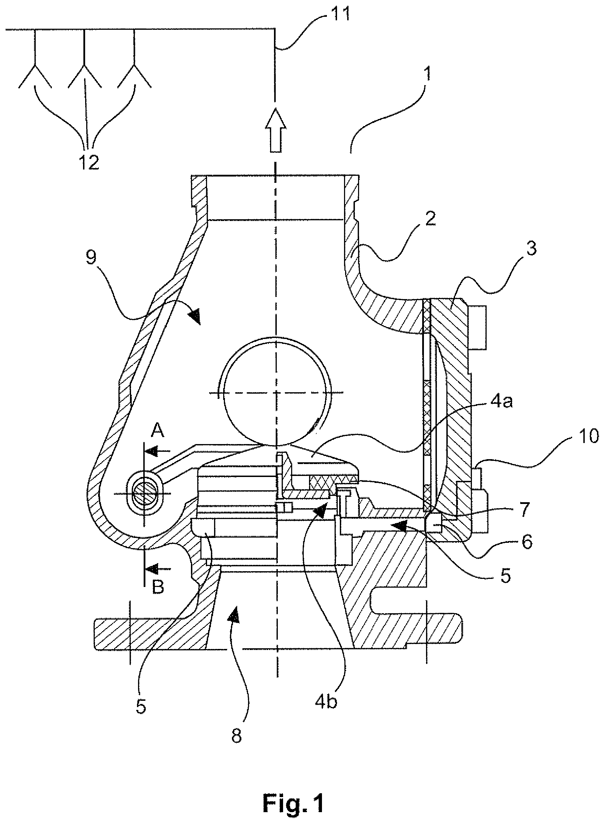

Ein Feuerlöschanlagenventil 1 gemäß der vorliegenden Erfindung ist in Fig. 1 dargestellt. Es ist eine bevorzugte Ausgestaltung als Naßalarmventil dargestellt. Das Feuerlöschanlagenventil 1 weist ein Gehäuse 2 auf. Ein Gehäusedeckel 3 ist Bestandteil des Gehäuses 2 und mit diesem fluiddicht verschraubt.

Im Inneren des Gehäuses 2 ist ein Schließkörper 4a auf einem Ventilsitz 4b angeordnet, eine Dichtung 7 sorgt für die fluiddichte Abtrennung der Fluideintrittskammer 8 und der Fluidaustrittskammer 9 gegenüber dem Alarmkanal 5. Der Schließkörper 4a ist zwischen einer (in Fig. 1 gezeigten) Sperrstellung und einer Freigabestellung hin- und her bewegbar. Hin und her umfasst nicht nur eine translatorische, sondern auch rotatorische und andere Bewegungsformen. In der (nicht gezeigten) Freigabestellung sind eine Fluideintrittskammer 8, und eine Fluidaustrittskammer 9 im Inneren des Gehäuses 2 fluidleitend miteinander verbunden.

In das Gehäuse 2 ist der mit dem Ventilsitz 4b in Verbindung stehende Alarmkanal 5 integriert, in welchen wirkend ein Drucksensor 6 angeordnet ist. Der Drucksensor 6 ist in den Gehäusedeckel 3 des Gehäuses 2 integriert. Über eine signalleitende Verbindung ist eine Datenschnittstelle 10 nach außen geführt, und von außen am Gehäusedeckel 3 abgreifbar.

Das Löschanlagenventil 1 ist beispielsweise in einer Fluidleitung 11 anordenbar, welche dazu eingerichtet ist, Löschfluid einer oder mehreren Sprinklerdüsen 12 zuzuleiten.

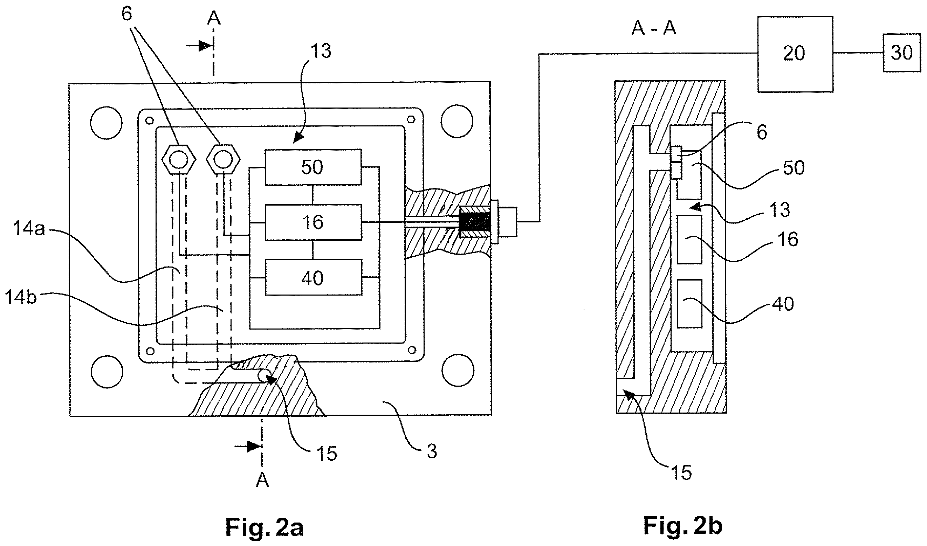

Der Gehäusedeckel 3 des Gehäuses 2, welcher vorzugsweise als Handlochdeckel ausgeführt ist, ist schematisch in Fig. 2a, b dargestellt. Im gezeigten Ausführungsbeispiel weist der Gehäusedeckel 3 eine mit einer transparenten Abdeckung versehene Ausnehmung 13 auf, welche in der dem Gehäuse 2 im montierten Zustand des Gehäusedeckels 3 zugewandten Seite ausgenommen ist. In der Ausnehmung 13 sind ein erster und ein zweiter Drucksensor 6 angeordnet, die jeweils über eine Fluidleitung 14 a, b als redundantes System mit einem Fluidport 15 verbunden sind. Der Fluidport 15 ist so positioniert, dass er bei montiertem Gehäusedeckel 3 auf dem Gehäuse 2 fluidleitend mit dem Alarmkanal 5 verbunden ist. Alternativ zu der hier gezeigten Anordnung könnten auch mehrere Drucksensoren mit unterschiedlichen Fluidports verbunden sein, wobei jeder Fluidport mit einer anderen Fluidkammer des Gehäuses fluidleitend in Verbindung gebracht wird, um die unterschiedlich herrschenden Drücke an verschiedenen Stellen des Gehäuses gleichzeitig messen zu können.

Die Drucksensoren 6 sind jeweils signalleitend mit einer Auswerteinheit 50 verbunden. Die Drucksensoren 6 und die Auswerteinheit 50 sind derart miteinander kommunizierend verbunden, dass die Auswerteinheit 50 die von den Drucksensoren 6 ausgegebenen Druckdaten erfassen und bearbeiten kann. Die Auswerteinheit 50 ist mit einem Datenspeicher 16 datenleitend verbunden, und dazu eingerichtet, Datenverarbeitungsergebnisse in dem Datenspeicher 16 zu hinterlegen, und/oder im Datenspeicher hinterlegte Daten, insbesondere Druckdaten von den Drucksensoren 6, einzulesen und zu verarbeiten.

Der Datenspeicher 16 ist optional alternativ oder zusätzlich direkt mit den Drucksensoren 6 datenleitend verbunden, um von diesen erhaltene Druckdaten abzuspeichern.

Die Auswerteinheit 50 ist optional alternativ oder zusätzlich mit einer Anzeigeeinheit 40 datenleitend verbunden und dazu eingerichtet, der Anzeigeeinheit 40 von dieser abrufbare Informationen, insbesondere Zustandsinformationen des Feuerlöschanlagenventils 1 zuzuspielen.

Die verschiedenen möglichen Datenverbindungen zwischen den Drucksensoren, der Auswerteinheit 50, dem Datenspeicher 16, und der Anzeigeeinheit 40 sowie der Datenschnittstelle 10 sind exemplarisch durch Strichlinien angedeutet.

Der Datenspeicher 16, die Anzeigeeinheit 40, die elektronische Auswerteinheit 50, die Drucksensoren 6 und die Datenschnittstelle 10 sind funktional eigenständige Einheiten, die alternativ zu der exemplarisch gezeigten Ausführungsform auch in separaten Ausnehmungen oder Aufnahmen im Gehäuse 2 oder im Gehäusedeckel 3 integriert sein können. Je nach der vom Kunden gewünschten Funktionsinhalt des Feuerlöschanlagenventils sind in bevorzugten Ausführungsformen nicht sämtliche der abgebildeten Elemente, sondern nur einzelne Elemente oder Unterkombinationen der Elemente in das Gehäuse oder den Gehäusedeckel integriert.

Wie sich aus Figuren 2 a, b ferner ergibt, ist die Datenschnittstelle 10 optional per Datenfernübertragungsmittel mit einer Datenverarbeitungseinheit 20 in einer Feuerlöschanlage verbunden. Die Datenverarbeitungseinheit 20 ist beispielsweise Teil einer Brandmelderzentrale. Die Datenverarbeitungseinheit ist dazu eingerichtet, die von der Datenschnittstelle 10 eingelesenen Informationen zu verarbeiten, und/oder weiterzuleiten, beispielsweise an externe Anzeigemittel 30 und/oder in Form von (Alarm-) Benachrichtigungen auszugeben, abhängig davon, was für Zustandsinformationen die Datenschnittstelle 10 bereitstellt.

Alternativ zu der hier gezeigten Integration im Gehäusedeckel können eine, mehrere oder sämtliche der in den Figuren 2 a, b gezeigten integrierten Elemente in einem anderen Bereich des Gehäuses 2 des Feuerlöschanlagenventils 1 integriert sein, oder beispielsweise auch in einem Zwischenflansch, welcher zwischen das Hauptgehäuse 2 und den Gehäusedeckel 3 gesetzt wird. Die grundsätzliche Funktionsweise ist vorzugsweise dieselbe wie beim hier gezeigten Ausführungsbeispiel.

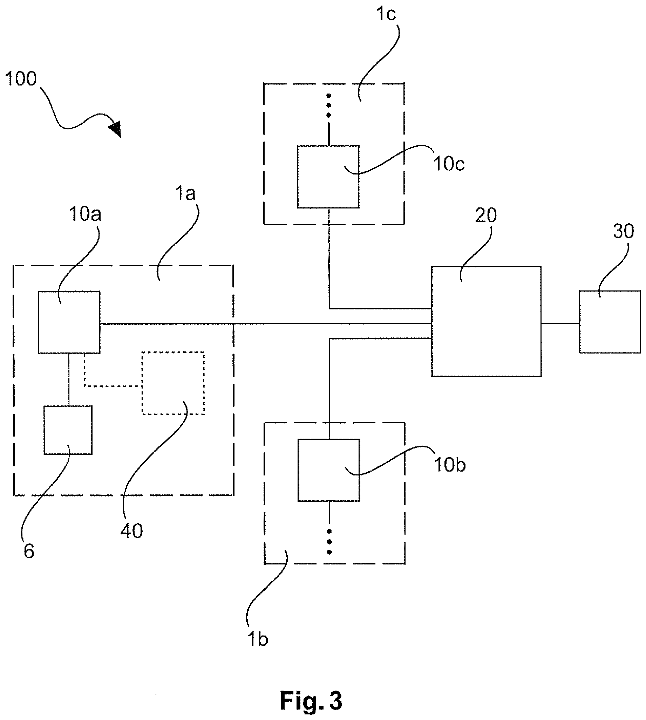

In Fig. 3 ist schematisch in Ergänzung zu den Figuren 2 a, b eine Feuerlöschanlage 100, die in Fig. 3 exemplarisch dargestellte Feuerlöschanlage überwacht eine Mehrzahl von Feuerlöschanlagenventilen 1 a, b, c, in dem sie datenleitend mit jeweils an den Feuerlöschanlagenventilen 1 a, b, c vorgesehenen Datenschnittstellen 10 a, b, c kommuniziert und von diesen bereitgestellte Zustandsinformationen abruft. Die abgerufenen Zustandsinformationen werden in einer Datenverarbeitungseinheit 20 verarbeitet, und beispielsweise entweder an externe Anzeigemittel 30 weitergegeben, oder zurück zu den Feuerlöschanlagenventilen 1 a, b, c gespielt, und dort auf internen Anzeigeeinheiten 40 wiedergegeben. Optional ist die Datenverarbeitungseinheit 20 dazu eingerichtet, die Ventile 1 a, b, c mittels entsprechender Steuerbefehlen zu steuern, beispielsweise deren Schließkörper zu sperren oder freizugeben.

Die in den Figuren 1 bis 3 gezeigte Feuerlöschanlage, insbesondere das in den Figuren 1 und 2 a, b gezeigte Feuerlöschanlagenventil arbeitet im Betrieb vorzugsweise dergestalt, dass zumindest einer der Drücke in der Fluideintrittskammer und/oder Fluidaustrittskammer und/oder im Alarmkanal permanent überwacht wird. Von der elektronischen Auswerteinheit 50 oder der Datenverarbeitungseinheit 20 werden die so erhaltenen Druckdaten verarbeitet, insbesondere mit vorgegebenen Grenzwerten abgeglichen. Abweichungen von einem Soll-Druckverlauf oder Überschreitungen beziehungsweise Unterschreitungen der vorgegebenen Grenzwerte werden protokolliert, beispielsweise im Datenspeicher 16 der Feuerlöschanlagenventile oder einem (nicht dargestellten) Datenspeicher der Datenverarbeitungseinheit 20. Wenn beispielsweise der Druck in der Fluideintrittskammer fällt, obwohl der Schließkörper als in Sperrstellung befindlich gemeldet wird, ist die Datenverarbeitungseinheit vorzugweise dazu eingerichtet, ein entsprechendes Fehlersignal auszugeben. Wenn beispielsweise der Druck in dem - im Bereitschaftszustand unter atmosphärischem Druck stehenden - Alarmkanal durch Öffnen des Alarmventils steigt, ist die Datenverarbeitungseinheit vorzugweise dazu eingerichtet, ein entsprechendes Alarmsignal auszugeben.

Wenn beispielsweise der Druck in der Fluidaustrittskammer unter einen bestimmten Grenzwert fällt, etwa nach Inbetriebnahme der Sprinklerdüsen, unterhalb dessen der Schließkörper öffnen sollte, sich aber trotz der Meldung des Ventils, dass sich der Schließkörper in Freigabestellung befindet, keine Druckänderung im Fluideintrittsbereich einstellt, ist die Datenverarbeitungseinheit vorzugsweise dazu eingerichtet, auch hierfür ein entsprechendes Signal für die vermutete Störung auszugeben.

In ähnlicher Weise ist mittels der laufenden Drucküberwachung im Inneren des Feuerlöschanlagenventils das Auftreten von Leckagen oder sonstigen Funktionsstörungen aus der Ferne detektierbar. Manuelle Wartungseinsätze können dann zielgerichtet gestartet werden. Dies gilt umso mehr, wenn in den Zustandsinformationen des Feuerlöschanlagenventils auch dessen Standort und Bauart mit übermittelt werden und wenn eine Klartextanzeige vorhanden ist. Dies vereinfacht die Einweisung des Wartungspersonals immens.

### Bezugszeichen:

- 1, 1a, b, c: Feuerlöschanlagenventil
- 2: Gehäuse
- 3: Gehäusedeckel
- 4a: Schließkörper
- 4b: Ventilsitz
- 5: Alarmkanal
- 6: Drucksensor
- 7: Dichtung
- 8: Fluideintrittskammer
- 9: Fluidaustrittskammer
- 10, 10a,b, c: Datenschnittstelle
- 11: Fluidleitung
- 12: Sprinklerdüse
- 13: Ausnehmung
- 14a, b: Fluidleitung
- 15: Fluidport
- 16: Datenspeicher
- 20: Datenverarbeitungseinheit
- 30: Anzeigemittel
- 40: Anzeigeeinheit
- 50: Auswerteeinheit
- 100: Feuerlöschanlage

## Patentansprüche

1. Feuerlöschanlagenventil (1), mit
einem Gehäuse (2, 3), welches eine Fluideintrittskammer (8), eine Fluidaustrittskammer (9) und einen zwischen einem Sperrzustand und einem Freigabezustand hin- und herbewegbaren Schließkörper (4) aufweist, wobei die Fluideintrittskammer (8) und die Fluidaustrittskammer (9) im Sperrzustand voneinander getrennt sind und im Freigabezustand fluidleitend miteinander kommunizieren,
wobei mindestens ein Drucksensor (6) in das Gehäuse (2, 3) integriert ist,
wobei ein Alarmkanal (5) in das Ventil (1) integriert ist, der im Sperrzustand fluiddicht von den Fluidkammern (8, 9) getrennt ist und im Freigabezustand mit den Fluidkammern (8, 9) kommuniziert,
wobei der Drucksensor (6) dazu eingerichtet ist, den in dem Alarmkanal (5) herrschenden Druck zu erfassen.

2. Feuerlöschanlagenventil nach Anspruch 1,
wobei der Drucksensor (6) dazu eingerichtet ist, den in der Fluideintrittskammer (8) herrschenden Druck zu erfassen.

3. Feuerlöschanlagenventil nach Anspruch 1 oder 2,
wobei der Drucksensor (6) dazu eingerichtet ist, den in der Fluidaustrittskammer (9) herrschenden Druck zu erfassen.

4. Feuerlöschanlagenventil nach einem der vorstehenden Ansprüche,
mit mehreren Drucksensoren (6), wobei jeweils mindestens ein Drucksensor (6) vorgesehen und dazu eingerichtet ist, den Druck in der Fluideintrittskammer (8), und/oder der Fluidaustrittskammer (9), und/oder dem Alarmkanal (5) zu erfassen.

5. Feuerlöschanlagenventil nach einem der vorstehenden Ansprüche,
**dadurch gekennzeichnet, dass** eine Anzeigeeinheit (40) in das Gehäuse (2,3) integriert ist.

6. Feuerlöschanlagenventil nach einem der vorstehenden Ansprüche,
wobei der Drucksensor (6) mit einer Anzeigeeinheit, vorzugsweise mit der in das Gehäuse integrierten Anzeigeeinheit (40), zum Ausgeben der erfassten Druckdaten und/oder zum Ausgeben in Abhängigkeit von den erfassten Druckdaten ermittelter Informationen verbunden ist.

7. Feuerlöschanlagenventil nach einem der vorstehenden Ansprüche,
wobei der Drucksensor (6) mit einem Datenspeicher (16) zum Hinterlegen der erfassten Druckdaten verbunden ist,
wobei vorzugsweise die Anzeigeeinheit (40) mit dem Datenspeicher (16) und/oder einem oder mehreren externen Drucksensoren verbunden und dazu eingerichtet ist, die dort hinterlegten bzw. von dort übermittelten Druckdaten auszugeben.

8. Feuerlöschanlagenventil nach einem der vorstehenden Ansprüche,
wobei der integrierte Drucksensor (6) und/oder der Datenspeicher (16) und/oder ein oder mehrere externe Drucksensoren mit einer Datenschnittstelle (10) zum Auslesen und Fernübertragen der erfassten Druckdaten verbunden sind.

9. Feuerlöschanlagenventil nach einem der vorstehenden Ansprüche,
mit einer elektronischen Auswerteinheit (50), die zum Empfang von Daten und/oder zur Übermittlung von Zustandsinformationen des Ventils (1) mit einem, mehreren oder sämtlichen der folgenden Elemente verbunden ist:
- dem mindestens einen integrierten Drucksensor (6),
- der Anzeigeeinheit (40),
- der Datenschnittstelle (10),
- dem Datenspeicher (16),
- einem oder mehreren externen Drucksensoren;
wobei vorzugsweise die elektronische Auswerteinheit (50) dazu eingerichtet ist, von dem Drucksensor (6) und/oder dem Datenspeicher (16) und/oder einem oder mehreren externen Drucksensoren erhaltene Druckdaten mit vordefinierten Grenzwerten abzugleichen und bei Überschreiten oder Unterschreiten dieser Grenzwerte ein repräsentatives Signal als Zustandsinformation zu übermitteln.

10. Feuerlöschanlagenventil nach Anspruch 9,
wobei der Schließkörper (4) einen Steuerantrieb aufweist, und die elektronische Auswerteinheit (50) dazu eingerichtet ist, den Schließkörper (4) mittels des Steuerantriebs wahlweise in die Freigabe- in die Sperrstellung zu bringen.

11. Feuerlöschanlagenventil nach einem der Ansprüche 6 bis 10,
wobei eines, mehrere oder sämtliche der folgenden Elemente in das Gehäuse (2, 3) integriert sind:
- die Anzeigeeinheit (40),
- die Datenschnittstelle (10),
- der Datenspeicher (16),
- die elektronische Auswerteinheit (50).

12. Feuerlöschanlagenventil nach einem der vorstehenden Ansprüche,
wobei das Gehäuse (2) einen Gehäusedeckel (3) aufweist, der vorzugsweise als Handlochdeckel ausgebildet ist,
wobei vorzugsweise eines, mehrere oder sämtliche der folgenden Elemente in den Gehäusedeckel (3) integriert sind:
- der Drucksensor (6),
- die Anzeigeeinheit (40),
- die Datenschnittstelle (10),
- der Datenspeicher (16),
- die elektronische Auswerteinheit (50).

13. Feuerlöschanlagenventil nach einem der vorstehenden Ansprüche,
wobei das Feuerlöschanlagenventil (1) ein Nassalarmventil, oder ein Trockenalarmventil, oder ein Sprühwasserlöschventil oder ein vorgesteuertes Trockenalarmventil ist.

14. Feuerlöschanlage (100), insbesondere Sprinkler- oder Sprühwasserlöschanlage, mit
einer oder mehreren Fluidleitungen (11), in denen ein Feuerlöschanlagenventil (1) nach einem der vorstehenden Ansprüche zum Sperren und Freigeben der Fluidleitungen (11) angeordnet ist,
wobei vorzugsweise das Feuerlöschventil (1) eine Datenschnittstelle (10) aufweist, und die Feuerlöschanlage (100) eine Datenverarbeitungseinheit (20) aufweist, welche zum Auslesen der Datenschnittstelle (10) des Feuerlöschanlagenventils (1) mit diesem verbunden ist;
wobei vorzugsweise die Datenverarbeitungseinheit (20) dazu eingerichtet ist, die von der Datenschnittstelle (10) ausgelesenen Informationen zu analysieren, und in Abhängigkeit von dieser Analyse eines, mehrere oder sämtliche der folgenden Ereignisse auszulösen:
- Ausgeben einer Nachricht darüber, ob das Feuerlöschventil ordnungsgemäß arbeitet,
- Ausgeben einer Nachricht darüber, ob in der Fluidleitung ein ausreichend hoher Fluiddruck herrscht,
- Ausgeben einer Nachricht darüber, dass in der Fluidleitung kein ausreichend hoher Fluiddruck herrscht, und/oder
- Ausgeben einer Nachricht darüber, dass das Feuerlöschventil geöffnet wurde.

15. Verfahren zur Zustandsüberwachung eines Feuerlöschanlagenventils nach einem der vorstehenden Ansprüche, mit folgenden Verfahrensschritten:
- Erfassung eines Druckwertes in einem in das Ventil integrierten Alarmkanal (5),
- Vorgabe eines Druckgrenzwertes,
- Übermittlung von Zustandsinformationen und/oder einer Nachricht, insbesondere in Form einer Nachrichtendatei, an einen oder mehrere vordefinierte Empfänger, vorzugsweise wenn der erfasste Druckwert den vorgegebenen Druckgrenzwert überschreitet oder unterschreitet;
wobei vorzugsweise die Vorgabe durch Auswahl oder Einstellung eines Druckschalters erfolgt.

16. Verfahren nach Anspruch 15, wobei vor dem Verfahrensschritt (c) ein Vergleich des Druckwertes mit einem im Datenspeicher (16) vorhandenen mindestens einen vordefinierten Druckgrenzwert erfolgt.

## Claims

1. A fire extinguishing system valve (1) comprising a housing (2, 3) which has a fluid inlet chamber (8), a fluid outlet chamber (9) and a closing body (4a) reciprocable between a blocking state and a release state, wherein the fluid inlet chamber (8) and the fluid outlet chamber (9) are separated from each other in the blocking state and communicate with each other in fluid-conducting relationship in the release state,
wherein at least one pressure sensor (6) is integrated in the housing (2, 3),
**characterized in that** an alarm passage (5) is integrated in said valve (1), the alarm passage being sealed off from the fluid chambers (8, 9) in the blocking state and communicating with the fluid chambers (8, 9) in the release state,
wherein the pressure sensor (6) is adapted to detect the pressure prevailing in an alarm passage (5).

2. A fire extinguishing system valve according to claim 1
wherein the pressure sensor (6) is adapted to detect the pressure prevailing in the fluid inlet chamber (8).

3. A fire extinguishing system valve according to claim 1 or claim 2
wherein the pressure sensor (6) is adapted to detect the pressure prevailing in the fluid outlet chamber (9).

4. A fire extinguishing system valve according to one of the preceding claims comprising a plurality of pressure sensors (6), wherein there is respectively provided at least one pressure sensor (6) which is adapted to detect the pressure in: the fluid inlet chamber (8) and/or the fluid outlet chamber (9) and/or the alarm passage (5).

5. A fire extinguishing system valve according to the classifying portion of claim 1 or according to one of the preceding claims
**characterised in that** the display unit (40) is integrated in the housing (2, 3).

6. A fire extinguishing system valve according to one of the preceding claims
wherein the pressure sensor (6) is connected to a display unit, preferably to the display unit (4) integrated in the housing, for output of at least one of: the detected pressure data, or information ascertained in dependence on the detected pressure data.

7. A fire extinguishing system valve according to one of the preceding claims
wherein the pressure sensor (6) is connected to a data memory (16) for storing the detected pressure data,
wherein the display unit (40) is preferably connected to the data memory (16) and/or one or more external pressure sensors, and is adapted to output the pressure data stored there or communicated therefrom.

8. A fire extinguishing system valve according to one of the preceding claims
Wherein the integrated pressure sensor (8) and/or the data memory (16) and/or one or more external pressure sensors for reading out and remote transmission of the detected pressure data.

9. A fire extinguishing system valve according to one of the preceding claims, comprising an electronic evaluation unit (50) which for the reception of data and/or for the communication of state information of the valve (1) is connected to one, more or all of the following elements:
- the at least one integrated pressure sensor (6),
- the display unit (40),
- the data interface (10),
- the data memory (16), or
- one or more external pressure sensors,
wherein the electronic evaluation unit (50) is preferably adapted to compare pressure data from at least one of: the pressure sensor (6), the data memory (16), or one or more external pressure sensors to predefined limit values and when the value rises above or falls below said limit values to communicate a representative signal as status information.

10. A fire extinguishing system valve according to claim 9,
wherein the closing body (4) has a control drive and the electronic evaluation unit (50) is adapted to selectively move the closing body (4) into the release and into the blocking position by means of the control drive.

11. A fire extinguishing system valve according to one of the preceding claims, wherein one, more or all of the following elements are integrated in the housing (2, 3):
- the display unit (40),
- the data interface (10),
- the data memory (16), or
- the electronic evaluation unit (50).

12. A fire extinguishing system valve according to one of the preceding claims,wherein one, more or all of the following elements are integrated in the housing cover (3):
- the pressure sensor (6),
- the display unit (40),
- the data interface (10),
- the data memory (16), or
- the electronic evaluation unit (50).

13. A fire extinguishing system valve according to one of the preceding claims
wherein the fire extinguishing system valve (1) is a wet alarm valve or a dry alarm valve or a spray water extinguishing valve or a pilot-controlled dry alarm valve.

14. A fire extinguishing system (100), in particular a sprinkler system or spray water extinguishing system, comprising
one or more fluid lines (11) in which is arranged a fire extinguishing system valve (1) according to one of the preceding claims for blocking and releasing the fluid lines (11),
wherein the fire extinguishing valve (1) preferably has a data interface (10) and the fire extinguishing system (100) has a data processing unit (20) which is connected to the fire extinguishing system valve (1) for reading out the data interface (10) thereof,
wherein the data processing unit (20) preferably is adapted to analyse the information read out from the data interface (10) and in dependence on that analysis to trigger one, more or all of the following events:
- output of a message as to whether the fire extinguishing valve is operating correctly,
- output of a message as to whether there is a sufficiently high fluid pressure in the fluid line,
- output of a message as to whether there is not a sufficiently high fluid pressure in the fluid line, or
- output of a message as to whether the fire extinguishing valve has been opened.

15. A method of state monitoring of a fire extinguishing system valve, in particular a fire extinguishing system valve according to one of the preceding claims, comprising the following method steps:
- detecting a pressure value in an alarm passage (5) that is integrated in said valve,
- presetting a pressure limit value, and
- communicating at least one of: status information and/or a message, in particular in the form of a message data file, to one or more defined receivers, preferably if the detected pressure value rises above or falls below the predetermined pressure limit value;
wherein the presetting is effected by selection or setting of a pressure switch.

16. A method according to claim 15, wherein prior to method step (c) a comparison of the pressure value to at least one predefined pressure limit value present in the data memory (16) is effected.

## Revendications

1. Vanne d'installation d'extinction d'incendie (1) avec
un boîtier (2, 3), lequel présente une chambre d'entrée de fluide (8), une chambre de sortie de fluide (9) et un corps de fermeture (4) pouvant être déplacé en va-et-vient entre un état de blocage et un état de déblocage, dans laquelle la chambre d'entrée de fluide (8) et la chambre de sortie de fluide (9) sont séparées l'une de l'autre dans l'état de blocage et communiquent entre elles en acheminant du fluide dans l'état de déblocage,
dans laquelle au moins un capteur de pression (6) est intégré dans le boîtier (2, 3),
dans laquelle un canal d'alarme (5) est intégré dans la vanne (1), lequel est séparé des chambres de fluide (8, 9) dans l'état de blocage et communique avec les chambres de fluide (8, 9) dans l'état de déblocage,
dans laquelle le capteur de pression (6) est mis au point pour détecter la pression régnant dans le canal d'alarme (5).

2. Vanne d'installation d'extinction d'incendie selon la revendication 1,
dans laquelle le capteur de pression (6) est mis au point pour détecter la pression régnant dans la chambre d'entrée de fluide (8).

3. Vanne d'installation d'extinction d'incendie selon la revendication 1 ou 2,
dans laquelle le capteur de pression (6) est mis au point pour détecter la pression régnant dans la chambre de sortie de fluide (9).

4. Vanne d'installation d'extinction d'incendie selon l'une quelconque des revendications précédentes,
avec plusieurs capteurs de pression (6), dans laquelle respectivement au moins un capteur de pression (6) est prévu et est mis au point pour détecter la pression dans la chambre d'entrée de fluide (8) et/ou dans la chambre de sortie de fluide (9) et/ou dans le canal d'alarme (5).

5. Vanne d'installation d'extinction d'incendie selon l'une quelconque des revendications précédentes,
**caractérisée en ce qu'**une unité d'affichage (40) est intégrée dans le boîtier (2, 3).

6. Vanne d'installation d'extinction d'incendie selon l'une quelconque des revendications précédentes,
dans laquelle le capteur de pression (6) est relié à une unité d'affichage, de préférence à l'unité d'affichage (40) intégrée dans le boîtier, pour délivrer en sortie les données de pression détectées et/ou pour délivrer en sortie des informations déterminées en fonction des données de pression détectées.

7. Vanne d'installation d'extinction d'incendie selon l'une quelconque des revendications précédentes,
dans laquelle le capteur de pression (6) est relié à une mémoire de données (16) destinée à enregistrer les données de pression détectées,
dans laquelle de préférence l'unité d'affichage (40) est reliée à la mémoire de données (16) et/ou à un ou plusieurs capteurs de pression externes et est mise au point pour délivrer en sortie les données de pression enregistrées dans celle-ci ou transférées depuis celle-ci.

8. Vanne d'installation d'extinction d'incendie selon l'une quelconque des revendications précédentes,
dans laquelle le capteur de pression (6) intégré et/ou la mémoire de données (16) et/ou un ou plusieurs capteurs de pression externes sont reliés à une interface de données (10) destinée à lire et à transmettre à distance les données de pression détectées.

9. Vanne d'installation d'extinction d'incendie selon l'une quelconque des revendications précédentes,
avec une unité d'évaluation électronique (50), qui est reliée, pour recevoir des données et/ou pour transférer des informations d'état de la vanne (1), à un, plusieurs ou tous les éléments suivants :
- l'au moins un capteur de pression (6) intégré,
- l'unité d'affichage (40),
- l'interface de données (10),
- la mémoire de données (16),
- un ou plusieurs capteurs de pression externes ;
dans laquelle de préférence l'unité d'évaluation électronique (50) est mise au point pour mettre en regard des données de pression obtenues par le capteur de pression (6) et/ou la mémoire de données (16) et/ou à un ou plusieurs capteurs de pression à des valeurs limites prédéfinies et pour transmettre, en tant qu'informations d'état, un signal représentatif en cas de dépassement ou de non-dépassement desdites valeurs limites.

10. Vanne d'installation d'extinction d'incendie selon la revendication 9,
dans laquelle le corps de fermeture (4) présente un entraînement de commande, et l'unité d'évaluation électronique (50) est mise au point pour amener le corps de fermeture (4) au choix dans la position de déblocage et dans la position de blocage au moyen de l'entraînement de commande.

11. Vanne d'installation d'extinction d'incendie selon l'une quelconque des revendications 6 à 10,
dans laquelle un, plusieurs ou tous les éléments suivants sont intégrés dans le boîtier (2, 3) :
- l'unité d'affichage (40),
- l'interface de données (10),
- la mémoire de données (16),
- l'unité d'évaluation électronique (50).

12. Vanne d'installation d'extinction d'incendie selon l'une quelconque des revendications précédentes,
dans laquelle le boîtier (2) présente un couvercle de boîtier (3), qui est réalisé de préférence en tant que couvercle à trou de visite,
dans laquelle de préférence un, plusieurs ou tous les éléments suivants sont intégrés dans le couvercle de boîtier (3) :
- le capteur de pression (6),
- l'unité d'affichage (40),
- l'interface de données (10),
- la mémoire de données (16),
- l'unité d'évaluation électronique (50).

13. Vanne d'installation d'extinction d'incendie selon l'une quelconque des revendications précédentes,
dans laquelle la vanne d'installation d'extinction d'incendie (1) est une vanne d'alarme humide, ou une vanne d'alarme sèche ou une vanne d'extinction à eau de projection ou une vanne d'alarme sèche précommandée.

14. Installation d'extinction d'incendie (100), en particulier installation d'extinction à gicleur ou à eau de pulvérisation, avec
un ou plusieurs conduits de fluide (11), dans lesquels une vanne d'installation d'extinction d'incendie (1) selon l'une quelconque des revendications précédentes est disposée pour bloquer et débloquer les conduits de fluide (11),
dans laquelle de préférence la vanne d'extinction d'incendie (1) présente une interface de données (10), et l'installation d'extinction d'incendie (100) présente une unité de traitement de données (20), laquelle est reliée, pour lire l'interface de données (10) de la vanne d'extinction d'incendie (1) à celle-ci ;
dans laquelle de préférence l'unité de traitement de données (20) est mise au point pour analyser les informations lues par l'interface de données (10) et pour déclencher, en fonction de ladite analyse, un, plusieurs ou tous les événements suivants :
- de délivrance en sortie d'un message à ce sujet pour savoir si la vanne d'extinction d'incendie fonctionne correctement,
- de délivrance en sortie d'un message pour savoir si une pression de fluide suffisamment élevée règne dans le conduit de fluide,
- de délivrance en sortie d'un message pour savoir si aucune pression de fluide suffisamment élevé ne règne dans le conduit de fluide, et/ou
- de délivrance en sortie d'un message pour savoir si la vanne d'extinction d'incendie a été ouverte.

15. Procédé de surveillance d'état d'une vanne d'installation d'extinction d'incendie selon l'une quelconque des revendications précédentes, avec des étapes de procédé suivantes :
- de détection d'une valeur de pression dans un canal d'alarme (5) intégré dans la vanne,
- de spécification d'une valeur limite de pression,
- de transmission d'informations d'état et/ou d'un message, en particulier sous la forme d'un fichier de messages, à un ou plusieurs récepteurs prédéfinis, de préférence lorsque la valeur de pression détectée dépasse ou ne dépasse pas la valeur limite de pression spécifiée ;
dans lequel de préférence la spécification est effectuée par sélection ou réglage d'un commutateur manométrique.

16. Procédé selon la revendication 15, dans lequel une comparaison de la valeur de pression à l'au moins une valeur limite de pression prédéfinie présente dans la mémoire de données (16) est effectuée avant l'étape de procédé (c).
